# EUROPEAN PATENT APPLICATION

(11) **EP 3 043 502 A1**
(43) Date of publication of application: **13.07.2016**
(21) Application number: 16150734.8
(22) Date of filing: 11.01.2016
(51) Int. Cl.: H04L 1/18

(54) **METHODS OF HANDLING WIRELESS COMMUNICATIONS FOR COMMUNICATION SYSTEM**

(30) Priority: 09.01.2015 US 201562101394 P
(71) Applicant: HTC Corporation, Taoyuan City 330 (TW)
(72) Inventor: WU, Chih-Hsiang, 330 Taoyuan City (TW)
(74) Representative: Ljungberg, Robert

(57) **Abstract**

A method of handling wireless communications for a network of a communication system is disclosed, which includes: communicating with a communication device of the communication system using normal latency configuration; receiving user equipment (UE) capability information from the communication device, the UE capability information indicating that the communication device supports reduced latency; transmitting a configuration message to the communication device in response to the UE capability information, the configuration message for configuring the communication device to apply reduced latency; transmitting an HARQ message to the communication device in a slot of an n-th subframe on a downlink component carrier (CC) after transmitting the configuration message; and receiving an HARQ feedback message from the communication device in a slot of an (n+x)th subframe on an uplink CC, where n and x are integers, and x is smaller than 4.

## Description

### CROSS REFERENCE TO RELATED APPLICATIONS

This application claims priority to U.S. Provisional Application Serial Number 62/101,394, filed on January 9, 2015, which is herein incorporated by reference.

### BACKGROUND

### Field of the Invention

The present invention relates to methods of handling wireless communications for a communication system, and more particularly to methods of handling wireless communications with reduced latency for a communication system.

### Description of Related Art

An Long-term Evolution Advanced (LTE-Advanced) system, as its name implies, is an evolution of the an LTE system. The LTE-Advanced system includes advanced techniques, such as carrier aggregation (CA), coordinated multipoint transmission/reception (CoMP), uplink (UL) multiple-input multiple-output (MIMO), etc.

For an LTE/LTE-Advanced system operated in frequency division duplex (FDD) mode, when a UE transmits a data block to a network through a physical uplink shared channel (PUSCH) in an n-th subframe, the UE may receive an HARQ negative acknowledgement (NACK) message according to downlink control information (DCI) on a physical HARQ indicator channel (PHICH) in an (n+4)th subframe for requesting retransmission. Then, when the UE receives the HARQ NACK message or the DCI, the UE performs retransmission of the data block through a PUSCH in an (n+8)th subframe. There are 7 consecutive subframes betweeh the n-th subframe and the (n+8)th subframe. Similarly, when the UE receives a data block through a PDSCH in the m-th subframe, the UE may transmit an HARQ feedback message (i.e. HARQ NACK) in an (m+4)th subframe, and then the network performs retransmission of the data block in an (m+8) subframe as early as possible. There are 7 consecutive subframes betweeh the m-th subframe and the (m+8)th subframe. As can be seen, latency is restricted due to HARQ operation as described above.

### SUMMARY

The objective of the present invention is to provide methods of handling wireless communications with reduced latency for a communication system for improving the latency restriction as mentioned above.

One aspect of the present invention relates to a method of handling wireless communications for a network of a communication system. The method includes communicating with a communication device of the communication system using normal latency configuration; receiving user equipment (UE) capability information from the communication device, the UE capability information indicating that the communication device supports reduced latency; transmitting a configuration message to the communication device in response to the UE capability information, the configuration message for configuring the communication device to apply reduced latency; transmitting a first hybrid automatic repeat request (HARQ) message to the communication device in a slot of an n-th subframe on a downlink component carrier (CC) after transmitting the configuration message; and receiving a first HARQ feedback message from the communication device in a slot of an (n+x)th subframe on a first uplink CC, wherein n and x are integers, and x is positive and smaller than 4.

Another aspect of the present invention relates to a method of handling wireless communications for a network of a communication system. The method includes communicating with a communication device of the communication system using normal latency configuration; receiving user equipment (UE) capability information from the communication device, the UE capability information indicating that the communication device supports reduced latency; transmitting a configuration message to the communication device in response to the UE capability information, the configuration message for configuring the communication device to apply reduced latency; receiving a first hybrid automatic repeat request (HARQ) message from the communication device in a slot of an n-th subframe on a first uplink component carrier (CC) after transmitting the configuration message; and transmitting a first HARQ feedback message to the communication device in a slot of an (n+x)th subframe on a first downlink CC, wherein n and x are integers, and x is positive and smaller than 4.

Another aspect of the present invention relates to a method of handling wireless communications for a communication device of a communication system. The method includes communicating with a network of the communication system using normal latency configuration; transmitting user equipment (UE) capability information to the network, the UE capability information indicating that the communication device supports reduced latency; receiving a configuration message from the network, wherein the configuration message is transmitted by the network for configuring the reduced latency in response to the UE capability information; applying reduced latency in response to the configuration message; receiving a first hybrid automatic repeat request (HARQ) message from the network in a slot of an n-th subframe on a downlink component carrier (CC) after applying the reduced latency; and transmitting a first HARQ feedback message to the network in a slot of an (n+x)th subframe on a uplink CC, wherein n and x are integers, and x is positive and smaller than 4.

Another aspect of the present invention relates to a method of handling wireless communications for a communication device of a communication system. The method includes communicating with a network of the communication system using normal latency configuration; transmitting user equipment (UE) capability information to the network, the UE capability information indicating that the communication device supports reduced latency; receiving a configuration message from the network, wherein the configuration message is sent by the network for configuring the reduced latency in response to the UE capability information; applying reduced latency in response to the configuration message; transmitting a first hybrid automatic repeat request (HARQ) message to the network in a slot of an n-th subframe on a first uplink component carrier (CC); and receiving a first HARQ feedback message from the network in a slot of an (n+x)th subframe on a first downlink CC, wherein n and x are integers, and x is positive and smaller than 4.

### BRIEF DESCRIPTION OF THE DRAWINGS

The foregoing aspects and many of the accompanying advantages of this invention will become more readily appreciated as the same becomes better understood by reference to the following detailed description, when taken in conjunction with the accompanying drawings.
FIG. 1 exemplarily illustrates a schematic diagram of a communication system.
FIG. 2 illustrates a structure diagram of a radio frame for a communication system.
FIG. 3 illustrates a structure diagram of an uplink resource grid for a communication system.
FIG. 4A is a flowchart of a method of handling wireless communications for a network of a communication system in accordance with some embodiments of the present invention.
FIG. 4B is a flowchart of a method of handling wireless communications for a network of a communication system in accordance with some embodiments of the present invention.
FIG. 5 is a flowchart of a method of handling wireless communications for a communication device of a communication system in accordance with some embodiments of the present invention.
FIG. 6A is a flowchart of a method of handling wireless communications for a network of a communication system in accordance with some embodiments of the present invention.
FIG. 6B is a flowchart of a method of handling wireless communications for a network of a communication system in accordance with some embodiments of the present invention.
FIG. 7 is a flowchart of a method of handling wireless communications for a communication device of a communication system in accordance with some embodiments of the present invention.
FIG. 8 is a schematic diagram of a data processing system in accordance with some embodiments of the present invention.

### DETAILED DESCRIPTION

The detailed explanation of the present invention is described as following. The described preferred embodiments are presented for purposes of illustrations and description, and they are not intended to limit the scope of the present invention.

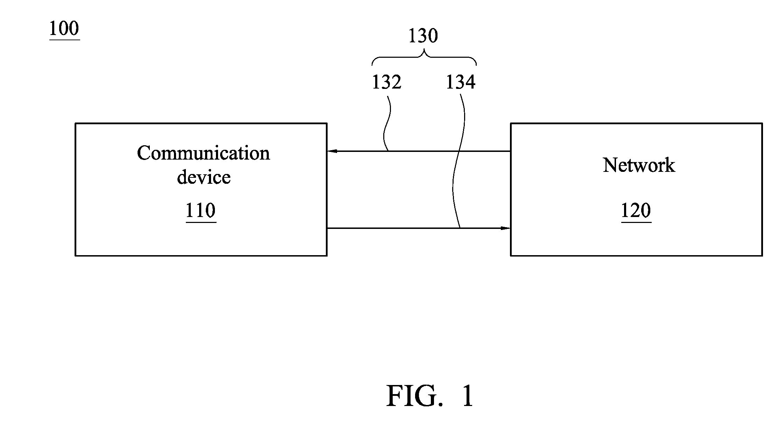

Referring to FIG. 1, which exemplarily illustrates a schematic diagram of a communication system 100. The communication system 100 may be a wireless communication system, such as a Long-term Evolution Advanced (LTE-Advanced) system (i.e. an evolved universal terrestrial radio access network (E-UTRAN) and evolved packet core (EPC)) or any other similar wireless communication system. As shown in FIG. 1, a communication device 110 and a network 120 are communicatively connected through a communication channel 130. The network 120 may include one or more base stations for serving the communication device 110. In a case of LTE-Advanced system, the communication device 110 is also called as User Equipment (UE), the network 120 is also called as E-UTRAN, the base stations in the network 120 are also called as evolved NodeBs (eNBs), and the communication device 110 and the network 120 communicate via an LTE-Uu interface. The communication channel 130 may include one or more downlink channels 132 and/or one or more uplink channels 134.

If the communication device 110 supports carrier aggregation (CA) or dual connectivity (DC), the communication device 110 may aggregate multiple component carriers (CCs) in time division duplex (TDD) and/or frequency division duplex (FDD) modes for communicatively connecting the network 120 in the same frequency band or different frequency bands. A cell has an uplink CC and a downlink CC. If the cell is a FDD cell, the uplink CC and downlink CC have different physical frequencies. If the cell is a TDD cell, the uplink and downlink CCs are a same CC. For simplicity, the UE is used to represent the communication device 110 in the following embodiments.

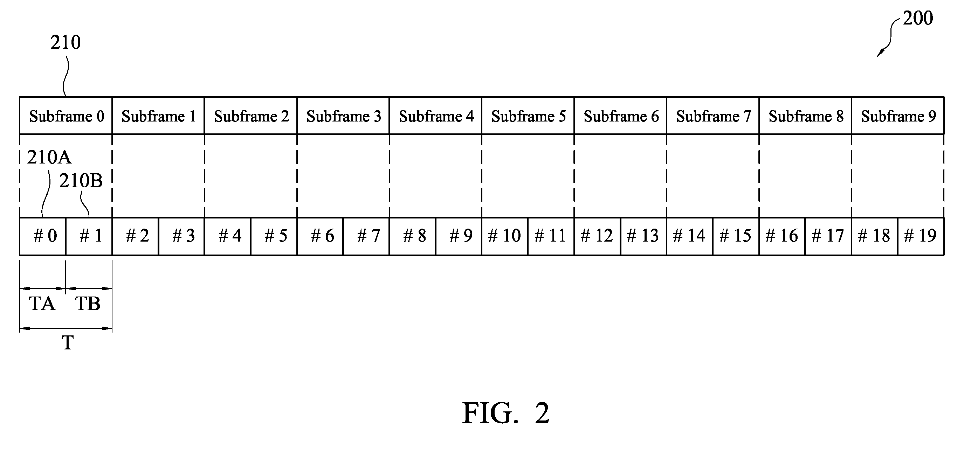

FIG. 2 illustrates a structure diagram of a radio frame 200 for a communication system which is exemplarily an LTE or an LTE-Advanced system. The radio frame 200 illustrated in FIG. 2 is an FDD radio frame (i.e. Type 1 radio frame). The radio frame 200 includes ten subframes 210 (Subframe 0-9), and each subframe 210 has two half subframes 210A and 210B with equal duration. As shown in FIG. 2, each half subframe occupies a slot. The slots in the radio frame 200 are labeled with #0 through #19. For example, the Subframe 0 includes two half subframes 210A and 210B and has a duration T. The duration T for each subframe 210 is referred to as a TTI (transmission time interval), which may be the unit of data transmission. The half subframes 210A and 210B respectively occupy the slots #0 and #1. The slots #1 and #2 respectively have durations TA and TB, and the durations TA and TB are the same. For an LTE or an LTE-Advanced system, the duration T is 1 minisecond (ms), and both of the durations TA and TB are 0.5 ms.

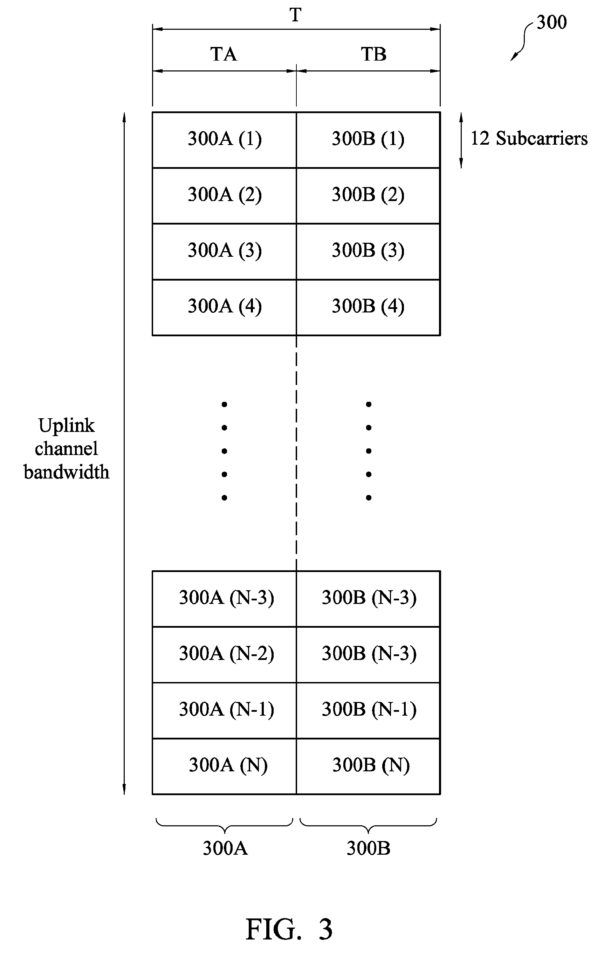

FIG. 3 illustrates an uplink resource grid 300 for a communication system which is exemplarily an LTE or an LTE-Advanced system. The uplink resource grid 300 includes two half uplink resource grids 300A and 300B and has a duration T. The half uplink resource grids 300A and 300B respectively have durations TA and TB, and the durations TA and TB are the same. The half uplink resource grid 300A includes N resource blocks 300A(1)-300A(N) occupying different uplink frequency subcarriers, and the half uplink resource grid 300B includes N resource blocks 300B(1)-300B(N) occupying different uplink frequency subcarriers. Each of the resource blocks 300A(1)-300A(N) and 300B(1)-300B(N) may be assigned for a physical uplink control channel (PUCCH) or a physical uplink shared channel (PUSCH). For example, the resource blocks 300A(1), 300A(2), 300A(N-1), 300A(N), 300B(1), 300B(2), 300B(N-1) and 300B(N) are assigned for PUCCHs, while the other resource blocks 300A(3)-300A(N-2) and 300B(3)-300B(N-2) may be assigned PUSCHs. Moreover, each of the resource blocks 300A(1)-300A(N) and 300B(1)-300B(N) has 12 subcarriers, and there are 7 OFDM symbols in the half uplink resource grid 300A or 300B.

In a case that there are N UEs using normal latency, i.e. 1ms TTI, one resource block in the half uplink resource grid 300A and one resource block in the half uplink resource grid 300B are assigned to a UE for a PUCCH or PUSCH transmission. For example, the uppermost resource block 300A(1) and the lowermost resource block 300B(N) are assigned to one UE for a PUCCH transmission, the second uppermost resource block 300A(2) and the second lowermost resource block 300B(N-1) are assigned to another UE for PUCCH transmission spanned over the two resource blocks, ... etc.

If the uplink resource grid 300 supports reduced latency, the uplink resource grid 300 may be assigned for more than N UEs. For example, the uppermost resource block 300A(1) in the half uplink resource grid 300A and the lowermost resource block 300B(N) in the half uplink resource grid 300B may be assigned for two different UEs both supporting reduced latency.

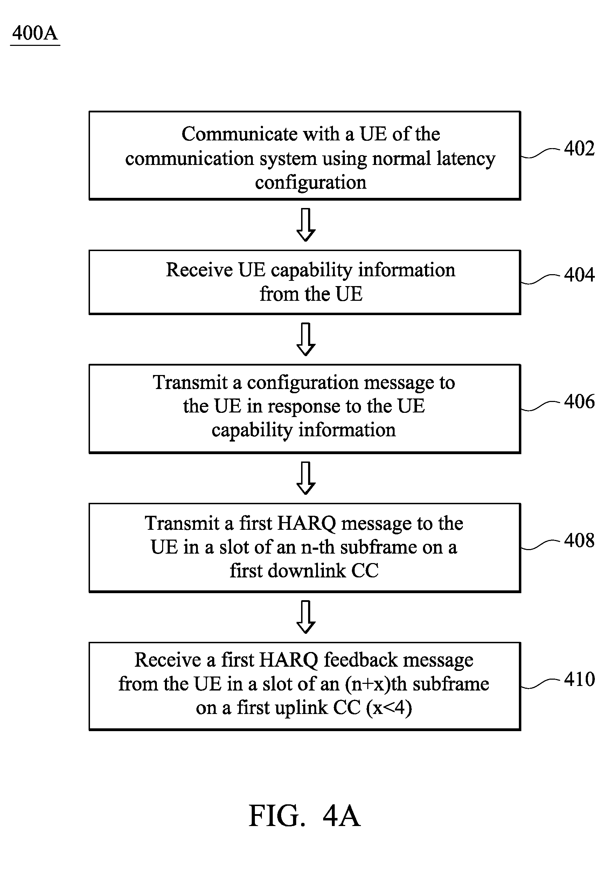

FIG. 4A is a flowchart of a method 400A of handling wireless communications for a network of a communication system in accordance with some embodiments of the present invention. The network operating the method 400A may be the network 120 illustrated in FIG. 1.

In step 402, the network communicates with a UE of the communication system using normal latency configuration.

In step 404, the network receives UE capability information from the UE. The UE capability information indicates that the UE supports reduced latency (i.e. reduced latency capability).

In step 406, after receiving the UE capability information, the network transmits a configuration message to the UE in response to the UE capability information for configuring the UE to apply the reduced latency. The UE applies (i.e. starts, enables or activates) the reduced latency to communicate with the network in response to the configuration message.

In step 408, the network transmits a first HARQ message to the UE in a slot of an n-th subframe on a first downlink CC after the step 406, where n is an integer. The UE receives and decodes the first HARQ message.

In some embodiments, the network may further transmit a first indication message on the first downlink CC to the UE for indicating the first HARQ message. The first indication message includes at least one of a resource block assignment, a modulation and coding scheme (MCS), an HARQ process number, an NDI and a redundancy version. The first indication message and first HARQ message may be in different slots, or in different OFDM symbols or resource blocks in the slot of the n-th subframe. The UE decodes the first HARQ message according to the first indication message. The HARQ process number of the first indication message indicates an HARQ process where the first HARQ message is addressed or an HARQ soft buffer where the first HARQ message is stored. The NDI of the first indication message indicates that the first HARQ message is a new transmission or a retransmission. The UE knows that the first HARQ message is a new transmission or a retransmission according to the NDI, using the HARQ process for the first HARQ message according to the HARQ process number, and demodulates and decodes the first HARQ message according to the MCS.

In step 410, the network receives a first HARQ feedback message from the UE in a slot of an (n+x)th subframe on a first uplink CC, where the first HARQ feedback message positively or negatively acknowledges reception of the first HARQ message, and x is a positive integer smaller than 4. The first HARQ feedback message may be an HARQ acknowledgement (ACK) message if the UE successfully receives and decodes the first HARQ message before the (n+x)th subframe, or may be an HARQ negative acknowledgement (NACK) message if the UE does not receive the first HARQ message or fails to decode the first HARQ message before the (n+x)th subframe.

If the network transmits the first HARQ message to the UE in the first slot of the n-th subframe, the network receives the first HARQ feedback message from the UE in the first slot of the (n+x)th subframe. Otherwise, if the network transmits the first HARQ message to the UE in the second slot of the n-th subframe, the network receives the first HARQ feedback message from the UE in the second slot of the (n+x)th subframe.

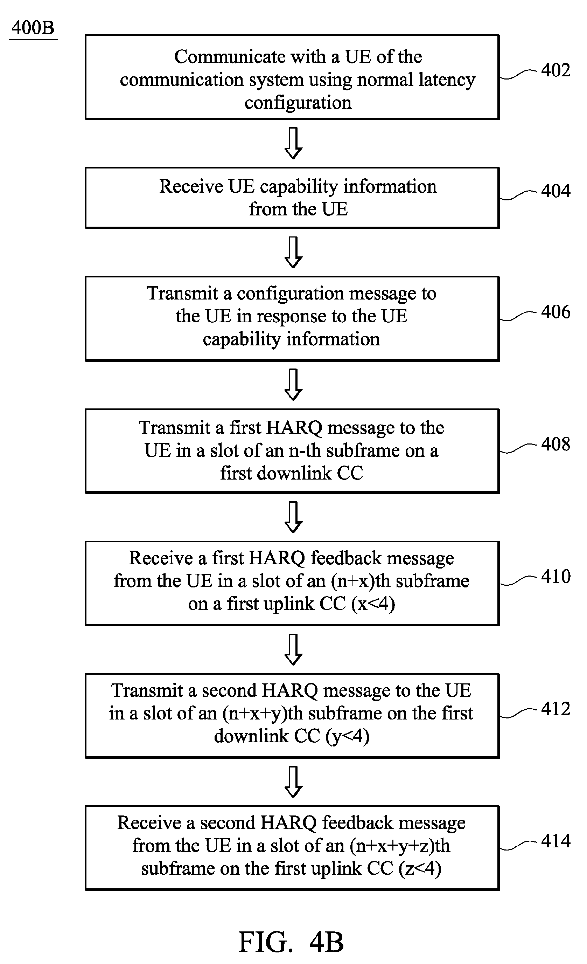

FIG. 4B is a flowchart of a method 400B of handling wireless communications for a network of a communication system in accordance with some embodiments of the present invention. The network operating the method 400B may be the network 120 illustrated in FIG. 1. Steps 402-410 are as described above, and are not repeated herein.

In step 412, the network transmits a second HARQ message to the UE in a slot of an (n+x+y)th subframe on the first downlink CC, where y is a positive integer smaller than 4. In some embodiments, the second HARQ message is transmitted by the network in response to the first HARQ feedback message. In particular, if the first HARQ feedback message is an HARQ ACK message, the second HARQ message is a new HARQ message. Otherwise, if the first HARQ feedback message is an HARQ NACK message, the second HARQ message is a retransmission of the first HARQ message.

In some embodiments, the network may further transmit a second indication message to the UE for indicating the second HARQ message. The second indication message includes at least one of a resource block assignment, an MCS, an HARQ process number, an NDI and a redundancy version. The second indication message and second HARQ message may be in different slots, or in different OFDM symbols or resource blocks in the slot of the (n+x+y)th subframe. The UE receives the second HARQ message according to the second indication message.

In step 414, the network receives a second HARQ feedback message from the UE in a slot of an (n+x+y+z)th subframe on the first uplink CC, where the second HARQ feedback message positively or negatively acknowledges reception of the second HARQ message, and z is a positive integer smaller than 4. The second HARQ feedback message may be an HARQ ACK message if the UE successfully receives and decodes the second HARQ message, or may be an HARQ NACK message if the UE does not receive the second HARQ message or fails to decode the second HARQ message.

In some embodiments, the network may further receive CSI from the UE in the slot of the (n+x)th and/or the (n+x+y+z)th subframe. The CSI may include a CQI, a PMI, a PTI or another similar indicator for indicating the channel state between the UE and the network.

If the network transmits the first HARQ message to the UE in the first slot of the n-th subframe, the network may transmit the second HARQ message to the UE in the first slot of the (n+x+y)th subframe, and receives the first and second HARQ feedback messages from the UE in the first slot of the (n+x)th and(n+x+y+z)th subframes, respectively. If the network transmits the first HARQ message to the UE in the second slot of the n-th subframe, the network may transmit the second HARQ message to the UE in the second slot of the (n+x+y)th subframe, and receive the first and second HARQ feedback messages from the UE in the second slot of the (n+x)th and (n+x+y+z)th subframes, respectively. In one example, the x, y and z in the methods 400A and 400B may have the same value (e.g. 2) or different values.

For normal latency, an HARQ entity in the network has most 8 HARQ processes for transmitting HARQ messages to the UE in a FDD serving cell. The UE also has at most 8 HARQ processes in its HARQ entity for receiving the HARQ messages from the network in the FDD serving cell. However, for the reduced latency, there are less than 8 HARQ processes used in the HARQ entity in the network for transmitting HARQ messages to the UE in a FDD serving cell. The UE also has less than 8 HARQ processes used in its HARQ entity for receiving the HARQ messages from the network in the FDD serving cell. For example, if x=y=2, then there may be at most 4 HARQ processes used in the HARQ entity in the eNB for transmitting HARQ messages to the UE in the FDD serving cell and there may be at most 4 HARQ processes used in the HARQ entity in the UE for receiving the HARQ messages from the network in the FDD serving cell.

It is noted that a new DCI format may be defined for the first and second indication messages. In this case, the UE receives and decodes an HARQ message in a resource block in a slot of a subframe according to DCI if the UE receives the DCI using the new DCI format from the network. The UE may receive and decode the HARQ message from two resource blocks in two slots of a subframe (i.e. normal latency) if the UE receives DCI using a legacy DCI format. In other words, the HARQ message is transmitted by the network across the two slots. The DCI using the legacy DCI format may be scrambled with a C-RNTI, System Information RNTI, Paging RNTI or Random Access RNTI. In this case, the network may transmit the DCI using the legacy DCI format to the UE for transmitting an HARQ message in two slots of a first subframe and transmit the DCI using the new DCI format to the UE for transmitting an HARQ message in a slot of a second subframe. In other words, the UE may communicate with the network using the both reduced latency and normal latency. The UE determines an HARQ message transmitted by the network in a slot or two slots of a subframe according to DCI using the new or legacy DCI format.

Alternatively, the new DCI format may not be necessarily defined, and the legacy DCI format(s) may be reused. In one example, after the UE is configured to apply the reduced latency by an RRC message, the UE decodes an HARQ message within a slot of a subframe according to received DCI using a legacy DCI format scrambled with a cell RNTI (C-RNTI). In another example, the network may configure a new RNTI specific for the reduced latency to the UE. The network may transmit configuration of the new RNTI in the configuration message to the UE. In this case, the network may transmit DCI scrambled with the C-RNTI to the UE for transmitting a first HARQ message in two slots of a subframe and transmit DCI scrambled with the new RNTI to the UE for transmitting a second HARQ message in a slot of a subframe. In other words, the UE may communicate with the network using the both reduced latency and normal latency. The UE tries to search the DCI scrambled with the C-RNTI and the DCI scrambled with the new RNTI in a slot. The UE determines an HARQ message transmitted by the network in a slot or two slots of a subframe according to DCI scrambled with the C-RNTI or new RNTI.

The network and UE may determine physical resource location (e.g. which subcarriers or physical resource blocks) of an HARQ feedback message in the second slot of an (q+x)th subframe for an HARQ message transmitted by the network in an q-th subframe according to location of resource elements or control channel element used to transmit an indication message for the HARQ message.

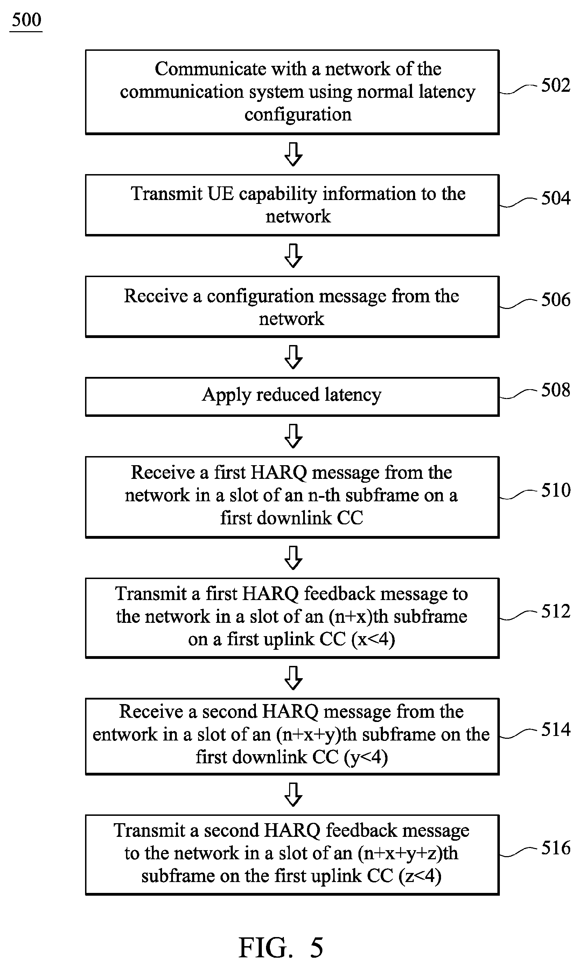

FIG. 5 is a flowchart of a method 500 of handling wireless communications for a UE of a communication system in accordance with the methods 400A and 400B. The UE operating the method 500 may be the communication device 110 illustrated in FIG. 1 or the UE in the methods 400A and 400B.

In step 502, the UE communicates with a network of the communication system using normal latency configuration. That is, the UE and network communicate with each other on a subframe basis for both downlink and uplink transmissions.

In step 504, the UE transmits UE capability information indicating the UE supports reduced latency, to the network.

In step 506, after transmitting the UE capability information, the UE receives a configuration message from the network. The configuration message is transmitted by the network in response to the UE capability information for configuring the UE to apply reduced latency.

In step 508, the UE applies reduced latency in response to the configuration message.

In step 510, the UE receives a first HARQ message from the network in a slot of an n-th subframe on a first downlink CC, where n is an integer.

In step 512, the UE transmits a first HARQ feedback message to the network in response to the first HARQ message in a slot of an (n+x)th subframe on a first uplink CC, where x is a positive integer smaller than 4.

In step 514, the UE receives a second HARQ message from the network in a slot of an (n+x+y)th subframe on the first downlink CC, where y is a positive integer smaller than 4.

In step 516, the UE transmits a second HARQ feedback message to the network in a slot of an (n+x+y+z)th subframe on the first uplink CC, where z is a positive integer smaller than 4.

It is noted that, steps 502-512 are for a UE of a communication system in accordance with the methods 400A, and steps 514 and 516 are for a UE of a communication system in accordance with the methods 400B. Details of the method 500 is as described in embodiments and examples described for methods 400A and 400B, and not repeated herein.

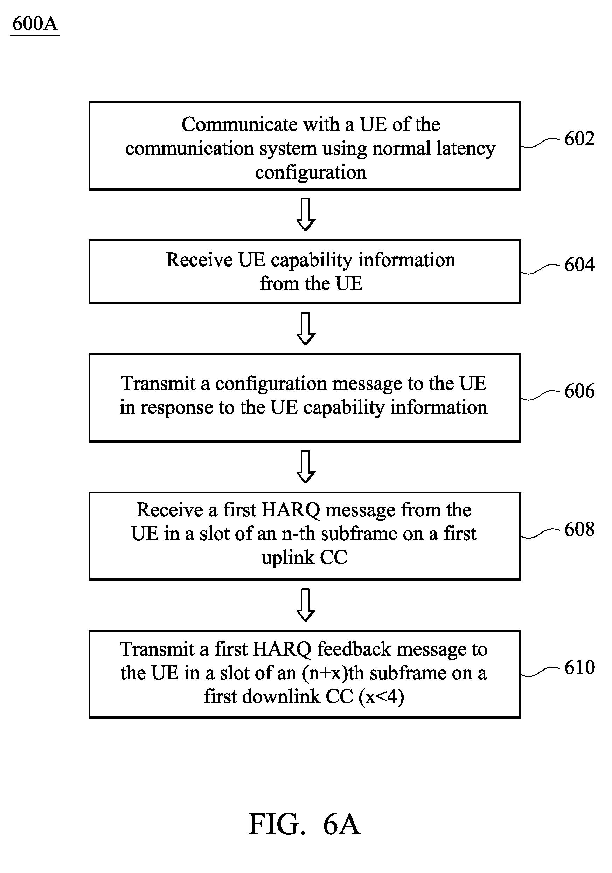

FIG. 6A is a flowchart of a method 600A of handling wireless communications for a network of a communication system in accordance with some embodiments of the present invention. The network operating the method 600A may be the network 120 illustrated in FIG. 1.

In step 602, the network communicates with a UE of the communication system using normal latency configuration.

In step 604, the network receives UE capability information from the UE. The UE capability information indicates that the UE supports reduced latency (i.e. reduced latency capability).

In step 606, after receiving the UE capability information, the network transmits a configuration message to the UE in response to the UE capability information for configuring the UE to apply reduced latency.

In step 608, the network receives a first HARQ message from the UE in a slot of an n-th subframe on a first uplink CC after step 606, where n is an integer.

In step 610, the network transmits a first HARQ feedback message to the UE in a slot of an (n+x)th subframe on a first downlink CC, where x is a positive integer smaller than 4. In some embodiments the first HARQ feedback message may be an HARQ ACK message if the network successfully decodes the first HARQ message, or may be an HARQ NACK message if the network fails to decode the first HARQ message. The HARQ ACK or NACK is transmitted on a PHICH. The first HARQ feedback message may be DCI transmitted on a a PDCCH or an EPDCCH.

In some embodiments, the network may further transmit a third indication message to the UE in a slot of an (n-x)th subframe for indicating that the UE transmits the first HARQ message, where x is a positive integer smaller than 4. The third indication message includes at least one of a resource block assignment, an MCS and an HARQ process number. The NDI of the third indication message indicates that the first HARQ message is a new transmission or a retransmission. The UE generates a new transmission or a retransmission for the first HARQ message according to the NDI, and uses an HARQ process to transmit the first HARQ message according to the MCS and the resource block assignment. If the uplink (i.e., from the UE to the network) is configured as asynchronous, the third indication message may further include an HARQ process number. The HARQ process number of the third indication message addresses the HARQ process which transmits the first HARQ message. In addition, the third indication message may further include a redundancy version (RV).

If the network receives the first HARQ message from the UE in the first slot of the n-th subframe, the network may transmit the first HARQ feedback message to the UE in the first slot of the (n+x)th subframe. If the network receives the first HARQ message from the UE in the second slot of the n-th subframe, the network may transmit the first HARQ feedback message to the UE in the first or second slot of the (n+x)th subframe. If the second slot is used, the network and UE may determine location of resource elements in the second slot for the first HARQ feedback message according to the lowest physical resource block (PRB) index of PRBs where the first HARQ message is transmitted, and Demodulation Reference Signal (DMRS) cyclic shift. If the first slot is used, the network and UE determines location of resource elements in the first slot for the first HARQ feedback message responding the first HARQ message transmitted by the network in the second slot according to the lowest PRB index of PRBs where the first HARQ message is transmitted, DMRS cyclic shift and slot number of the second slot (e.g., the first slot of a subframe is 0 and the second slot of the subframe is 1).

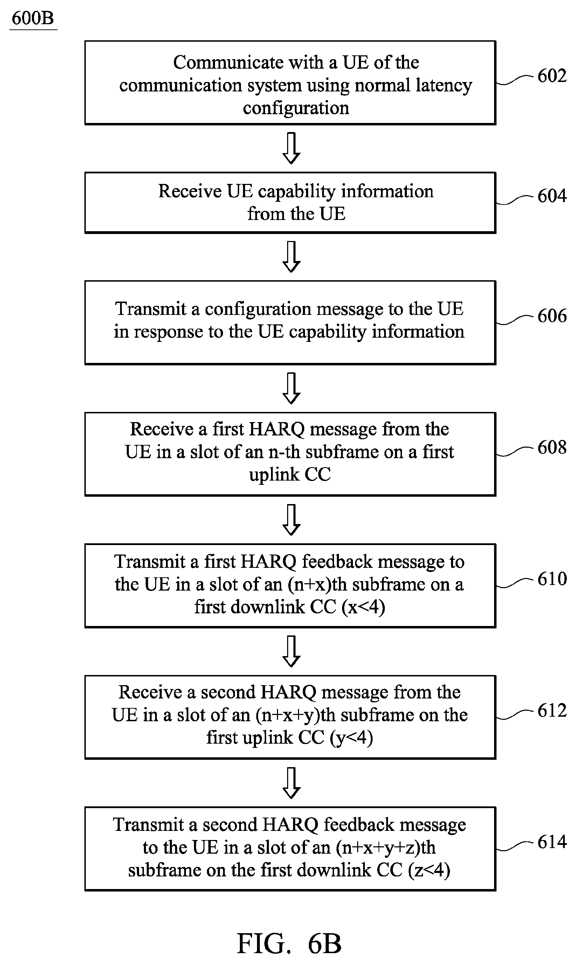

FIG. 6B is a flowchart of a method 600B of handling wireless communications for a network of a communication system in accordance with some embodiments of the present invention. The network operating the method 600B may be the network 120 illustrated in FIG. 1. Steps 602-610 are as described above, and are not repeated herein.

In step 612, the network receives a second HARQ message from the UE in a slot of an (n+x+y)th subframe on the first uplink CC, where y is a positive integer smaller than 4. In some embodiments, the second HARQ message is transmitted by the UE in response to the first HARQ feedback message. If the first HARQ feedback message is an HARQ ACK message, the second HARQ message is a new HARQ message. If the first HARQ feedback message is an HARQ NACK message, the second HARQ message is a retransmission of the first HARQ message.

In step 614, the network transmits a second HARQ feedback message to the UE in response to the second HARQ message in a slot of an (n+x+y+z)th subframe on the first downlink CC, where z is a positive integer smaller than 4. The second HARQ feedback message may be an HARQ ACK message if the network successfully receives and decodes the second HARQ message, or may be an HARQ NACK message if the network fails to decode the second HARQ message.

In some embodiments, the network may further transmit a forth indication message in a slot of an (n+x)th subframe to the UE for indicating that the UE transmits the second HARQ message. The fourth indication message includes at least one of a resource block assignment, an MCS and an HARQ process number. The UE may transmit the second HARQ message according to the fourth indication or in response to the first HARQ feedback message which is the HARQ NACK message. The fourth indication message is as described above for the third indication message. The HARQ process number in the fourth indication message may be that same as the HARQ process number in the third indication message.

If the network receives the first HARQ message from the UE in the first slot of the n-th subframe, the network receives the second HARQ message from the UE in the first slot of the (n+x+y)th subframe, and transmits the first and second HARQ feedback messages to the UE in the first slot of the (n+x)th and the (n+x+y+z)th subframe, respectively. If the network receives the first HARQ message from the UE in the second slot of the n-th subframe, the network receives the second HARQ message from the UE in the second slot of the (n+x+y)th subframe, and transmits the first and second HARQ feedback messages to the UE in the second slot of the (n+x)th and the (n+x+y+z)th subframe, respectively. Location of resource elements for the second HARQ feedback message is determined similarly as described above for the first HARQ feedback message.

In one example, the x, y and z in the methods 600A and 600B may have the same value (e.g. 2) or different values.

For normal latency, an HARQ entity in the UE has at most 8 (without uplink special multiplexing) or 16 (with uplink special multiplexing) HARQ processes for transmitting HARQ messages to the network in a FDD serving cell. The network also has at most 8 or 16 HARQ processes in its HARQ entity for receiving the HARQ messages from the UE in the FDD serving cell. However, for reduced latency, there are less than 8 (without uplink special multiplexing) or 16 (with uplink special multiplexing) HARQ processes used in the HARQ entity in the UE for transmitting HARQ messages to the network in the FDD serving cell. The network also has less than 8 or 16 HARQ processes used in its HARQ entity for receiving the HARQ messages from the UE. For example, if x=y=2, then there may be at most 4 (without uplink special multiplexing) or 8 (with uplink special multiplexing) HARQ processes used in the HARQ entity in the UE for transmitting HARQ messages to the network and there may be at most 4 or 8 HARQ processes used in the HARQ entity in the network for receiving the HARQ messages from the UE in the FDD serving cell.

It is noted that a new DCI format may be defined for the third and fourth indication messages. In this case, the UE transmits an HARQ message in a slot of an m-th subframe (i.e. reduced latency) if the UE receives the new DCI format in an (m-k)th subframe from the network, where m is an integer and k is a positive integer smaller than 4. The network decodes the HARQ message from a resource block in the slot of the subframe.

The UE may transmit an HARQ message in two slots of an (m-k+4)th subframe (i.e. normal latency) if the UE is required to receive a legacy DCI format and receives DCI using the legacy DCI format in the (m-k)th subframe. The network receives and decodes the HARQ message from two resource blocks in the two slots.

Alternatively, the new DCI format may not be necessarily defined, and the legacy DCI format(s) may be reused. In one example, after the UE is configured to apply the reduced latency by, for example, an RRC message, the UE only transmits an HARQ message in a slot of a subframe when receiving DCI using the legacy DCI format scrambled with a C-RNTI. In another example, the network configures a new RNTI specific for reduced latency to the UE. When the UE receives DCI using a legacy DCI format scrambled with the new RNTI in an i-th subframe, the UE transmits an HARQ message with the legacy DCI in an (i+x)th subframe, where x is a positive integer smaller than 4, e.g. x=2. The network may transmit configuration of the new RNTI the configuration message in the step 606 to the UE. In this case, the network may transmit DCI scrambled with the C-RNTI to the UE for transmitting a first HARQ message in two slots of a subframe and transmit DCI scrambled with the new RNTI to the UE for transmitting a second HARQ message in a slot of a subframe. In other words, the UE may communicate with the network using the both reduced latency and normal latency. The UE tries to search the DCI scrambled with the C-RNTI and the DCI scrambled with the new RNTI in a slot. The UE determines an HARQ message transmitted by the network in a slot or two slots of a subframe according to DCI scrambled with the C-RNTI or new RNTI.

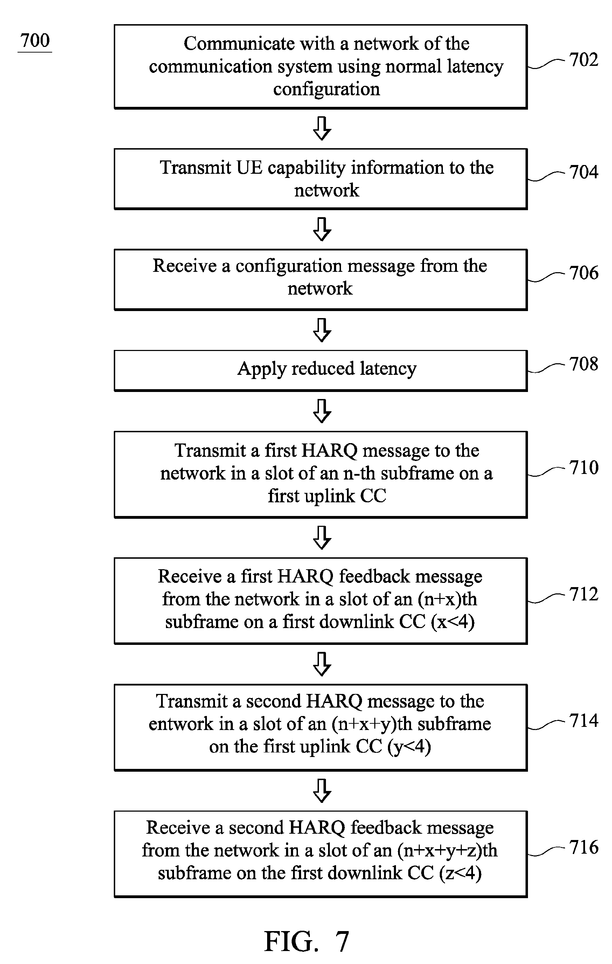

FIG. 7 is a flowchart of a method 700 of handling wireless communications for a UE of a communication system in accordance with the methods 600A and 600B of the present invention. The UE operating the method 700 may be the communication device 110 illustrated in FIG. 1 and the UE in the methods 600A and 600B.

In step 702, the UE communicates with a network of the communication system using normal latency configuration. That is, the UE and network communicate with each other on a subframe basis for both downlink and uplink transmissions.

In step 704, the UE transmits UE capability information indicating the UE supports reduced latency, to the network.

In step 706, after transmitting the UE capability information, the UE receives a configuration message from the network. The configuration message is transmitted by the network in response to the UE capability information.

In step 708, the UE applies reduced latency in response to the configuration message.

In step 710, the UE transmits a first HARQ message to the network in a slot of an n-th subframe, where n is an integer.

In step 712, the UE receives a first HARQ feedback message from the network in a slot of an (n+x)th subframe, where the first HARQ feedback message corresponds to the first HARQ message, and x is a positive integer smaller than 4.

In step 714, the UE transmits a second HARQ message to the network in a slot of an (n+x+y)th subframe, where y is a positive integer smaller than 4.

In step 716, the UE receives a second HARQ feedback message from the network in response to the second HARQ message in a slot of an (n+x+y+z)th subframe, where the second HARQ feedback message corresponds to the second HARQ message, and z is an integer smaller than 4.

It is noted that, steps 702-712 are for a UE of a communication system in accordance with the methods 600A, and steps 714 and 716 are for a UE of a communication system in accordance with the methods 600B. Details of the method 700 is as described in embodiments and examples described for methods 600A and 600B, and not repeated herein.

Realization of the methods above is not limited to the above description.

In one example, the network communicating with the UE of the communication system using normal latency configuration comprises that the UE and network communicate with each other on a subframe basis for both downlink and uplink transmissions. Each of the downlink and uplink transmissions includes an HARQ message (or called HARQ transmission) and is transmitted in two slots in a single subframe.

Each of the HARQ messages (or called HARQ transmissions) in embodiments above includes an encoded MAC PDU or a part of the encoded MAC PDU. The MAC PDU includes an Internet Protocol packet or a signaling message (e.g. RRC message). An HARQ feedback message may be transmitted through a PUCCH or a PUSCH if the PUSCH is scheduled. "a slot" and "a subframe" means a single slot and "a single subframe" respectively in embodiments above.

A reduced latency capability for downlink is that the UE is capable of receiving an HARQ message from the network in a slot of an n-th subframe and transmitting an HARQ feedback message to the network in a slot of an (n+x)th subframe in response to the HARQ message, where x is a positive integer smaller than 4. A reduced latency capability for uplink is that the UE is capable of transmitting an HARQ message to the network in a slot of an n-th subframe and receiving an HARQ feedback message from the network in a slot of an (n+x)th subframe, where the HARQ feedback message corresponds to the HARQ message, where x is a positive integer smaller than 4. In one example, the UE may separately indicate the reduced latency capability for uplink and downlink. Alternatively the UE may just indicate the reduced latency capability to the network and the UE has to support reduced latency capability for both uplink and downlink. In one example, the UE establishes an RRC connection with the network. The UE transmits the UE capability information (e.g. UE-EUTRA-Capability) including the reduced latency capability for uplink, downlink or both to the network via the RRC connection.

In one example, the configuration message may be a Radio Resource Control (RRC) message (e.g. RRCConnectionReconfiguration for E-UTRAN), a Medium Access Control (MAC) message (e.g. MAC control element for E-UTRAN) or a physical layer message (e.g. downlink control information (DCI) scrambled with a Radio Network Temporary Identifier (RNTI) for E-UTRAN). The network may configure the UE to apply the reduced latency for uplink, downlink or both according to the reduced latency capability. When applying the reduced latency for downlink, the UE starts to decode an HARQ message received in a slot of a subframe and to transmit an HARQ feedback message for the HARQ message to the network in a slot of a subframe as described above. Alternatively, the UE may transmit an HARQ feedback message to the network in two slots of a subframe (e.g. (n+x)th subframe) for an HARQ message transmitted in a slot of the subrame (e.g. n-th subframe) by the network. That is, the reduced latency is only applied to the HARQ message. When applying the reduced latency for uplink, the UE starts to transmit an HARQ message to the network in a slot of a subframe and decode an HARQ feedback message received in a slot of a subframe as described above.

In one example, the new and/or legacy DCI format(s) may be transmitted in Physical Downlink Control Channel (PDCCH), enhanced PDCCH (EPDCCH), or new PDCCH for reduced latency. The network may transmit configuration of the new PDCCH for the reduced latency to the UE in an RRC message when configuring the reduced latency. The configuration of the new PDCCH for reduced latency indicates time or frequency resources in a slot where the UE needs to search the new or legacy DCI format(s) scrambled with the C-RNTI or the new RNTI. In one example, the time or frequency resources include OFDM symbol(s), subcarriers, resource element(s), resource element group(s) or physical resource block(s). The configuration of the new PDCCH for reduced latency may further indicate which slot(s) where the new PDCCH may be transmitted. In one example, the new PDCCH may be transmitted in the first slot of a subframe and may not overlap the PDCCH in the first slot of the subframe (e.g. in different OFDM symbols). The new PDCCH may be transmitted in the second slot of a subframe. In another example, the new PDCCH may only be transmitted in the second slot of a subframe. The network may transmit DCI using the new or legacy DCI format for the reduced latency on PDCCH in the first slot of a subframe and DCI using the new or legacy DCI format for the reduced latency on the new PDCCH in the second slot of a subframe. In other words, the UE receives and decodes PDCCH in the first slot of the subframe and the new PDCCH in the second slot of the subframe.

The UE may indicate support of reduced latency (i.e. reduced latency capability) and support of a CA/DC configuration to the network. The CA/DC configuration includes at least two downlink CCs and at least one first uplink CC and is specified in 3GPP specification 36.101. In one example, the network may respectively apply reduced latency to a first and a second downlink CCs of the at least two downlink CCs according to the methods 400A and 400B. The UE may respectively apply reduced latency to a first and a second downlink CCs of the at least two downlink CCs according to the method 500. That is, the network transmits a first HARQ message to the UE in a slot of an n-th subframe on the first downlink CC and transmits a second HARQ message to the UE in a slot of an m-th subframe on the second downlink CC. The UE transmits a first HARQ feedback message to the network in a slot of an (n+x)th subframe on the first uplink CC and transmits a second HARQ feedback message to the network in a slot of an (m+x)th subframe on the first uplink CC. The first and second HARQ feedback messages respond the first and second HARQ messages respectively. If the first HARQ feedback is an HARQ NACK, the network transmits a third HARQ message to the UE in a slot of an (n+x+y)th subframe on the first downlink CC and receives a third HARQ feedback responding the third HARQ message in a slot of an (n+x+y+z)th on the first uplink CC. If the second HARQ feedback is an HARQ NACK, the network transmits a fourth HARQ message to the UE in a slot of an (m+x+y)th subframe on the second downlink CC and receives a fourth HARQ feedback responding the fourth HARQ message in a slot of an (m+x+y+z)th on the first uplink CC for CA. x, y and z are as described in methods 400A and 400B. m and n can be a same value or different values. Note that the UE may transmit the second and fourth HARQ feedback messages to the network in the slot of the (m+x)th subframe and in the slot of (m+x+y+z)th subframe respectively on a second uplink CC for CA if the CA configuration includes the second uplink CC and the network configures the UE transmit PUCCH on the second uplink CC for the second downlink CC. The UE may transmit the second and fourth HARQ feedback messages to the network in the slot of the (m+x)th subframe and in the slot of (m+x+y+z)th subframe respectively on a second uplink CC for DC. The network may transmit a first indication message in the slot of the n-th subframe for the first HARQ message on the first or second downlink CC and a third indication message in the slot of the (n+x+y)th subframe for the third HARQ message to the UE on the first or second downlink CC. The network may transmit a second indication message in the slot of the m-th subframe for the second HARQ message on the first or second downlink CC and a fourth indication message in the slot of the (m+x+y)th subframe for the fourth HARQ message to the UE on the first or second downlink CC. The UE receives and decodes the indication messages as described above and not repeated herein.

In another example, the network may apply the reduced latency to the first downlink CC according to the methods 400A and 400B but apply normal latency to the second downlink CC. The network configures the UE to apply the reduced latency to the first downlink CC and apply normal latency to the second downlink CC. The network transmits HARQ messages to the UE on the first downlink CC and the UE transmits corresponding HARQ feedback messages as described above. The network transmits each HARQ message to the UE on the second downlink CC in two slots in a subframe and the UE transmits each corresponding HARQ feedback message to the network in two slots of a subframe on the first uplink CC or the second uplink CC (if the second CC is configured as described above). The network transmits an indication message in PDCCH or EPDCCH to the UE for each HARQ message on the second CC. Details of normal latency operation is described above and by 3GPP specifications and not repeated herein.

Similarly the network may respectively apply reduced latency to an uplink CC of the CA/DC configuration according to the methods 600A and 600B when the network configures the CA/DC configuration and reduced latency to the UE. Accordingly the UE may apply the reduced latency to the uplink CC of the CA/DC configuration to communicate with the network according to the methods 700. For example, the CA/DC configuration includes a first downlink CC, a first uplink CC, a second downlink CC and a second uplink CC. When the network configures reduced latency to both the first and second uplink CCs, the UE transmits HARQ messages to the network on the first uplink CC according to the method 700 and the network transmits HARQ feedback messages responding the HARQ messages to the UE on the first downlink CC according to the methods 600B. The UE transmits HARQ messages to the network on the second uplink CC according to the method 700 and the network transmits HARQ feedback messages corresponding to the HARQ messages to the UE on the second downlink CC according to the method 600B. When the network does not configure reduced latency to the second uplink CC (i.e. normal latency is applied), the UE transmits an HARQ message to the network on the second uplink CC in two slots of the n-th subframe and the network transmits an HARQ feedback message responding the HARQ message, in the first slot of the (n+4)th subframe on the second downlink CC.

Furthermore, the reduced latency capability may be CA and DC agnostic. That is, the UE is capable of the reduced latency for each CC in any CA/DC configuration supported by the UE. Alternatively, the reduced latency capability may be CA or DC dependent. That is, the UE indicates the reduced latency capability for a CA/DC configuration, a CC or a pair of uplink and downlink CCs in the CA/DC configuration in the UE capability information. For example, the reduced latency capability may be associated to or a part of BandParameters, BandCombinationParameters and/or SupportedBandCombination information elements (IEs) specified for the CA/DC capabilities. Then, the network applies the reduced latency according to the reduced capability. In one example, the UE indicates to the network that it supports the reduced latency for a first CA/DC configuration but does not support the reduced latency for a second CA/DC configuration. Then, the network applies the reduced latency to the UE on each downlink CC in the first CA/DC configuration if the network configures the first CA/DC configuration to the UE and applies the normal latency to the UE on each downlink CC in the second CA/DC configuration if the network configures the second CA/DC configuration to the UE. Note that the network may configure the UE to apply the reduced latency for the first CA/DC configuration in the configuration message. In one example, in UE capability information, the UE indicates to the network that it supports the reduced latency for a first downlink CC in a CA/DC configuration but does not support the reduced latency for a second downlink CC in the CA/DC configuration. Then, the network applies the reduced latency to the UE on the first CC and applies the normal latency to the UE on the second downlink CC. Note that the network may configure the UE to apply reduced latency for the first CC in the configuration message. In another example, the UE may indicate to the network that it supports the reduced latency for both the first and second downlink CCs in the CA/DC configuration. Then, the network respectively applies reduced latency to the UE on the first and second CCs. Note that the network may configure the UE to apply reduced latency to a CC or a CA/DC configuration in the configuration message according to the reduced latency capability and CA/DC configuration as described above.

In one example, the UE capability information may indicate that the UE is only capable of performing reduced latency with maximum number of HARQ process(es) (e.g. 1, 2, 3 or 4 HARQ process(es) for uplink without spatial multiplexing and downlink), and the network should not make the UE use more than the maximum number of HARQ process(es) to transmit or receive HARQ messages. If the UE supports CA or DC, the UE may indicate the maximum number of HARQ process(es) for a CC, a CA/DC configuration, uplink or downlink. The UE may indicate a first maximum numbers of HARQ process(es) for a first CC and a second maximum numbers of HARQ process(es) for a second CC. The reduced latency capability above may include the maximum number of HARQ process(es). In another example, the maximum number of HARQ process(es) is not relevant to CA and DC but is generally applied to each of CCs.

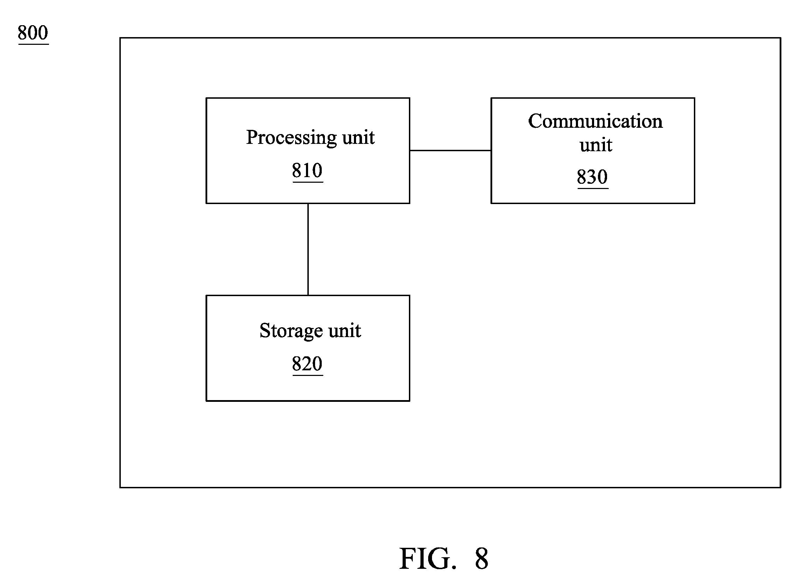

FIG. 8 illustrates a schematic diagram of a data processing system 800 in accordance with some embodiments of the present invention. The data processing system 800 may be the communication device 110, the network 120 or the UE or the network of the method 400A, 400B, 500, 600A, 600B or 700. The data processing system 800 includes a processing unit 810, a storage unit 820 and a communication unit 830. The processing unit 810 may be a microprocessor or an application-specific integrated circuit (ASIC). The method 400A, 400B, 500, 600A, 600B or 700 may be compiled into a program code, and such compiled program code may be stored in the storage unit 820. If the data processing system 800 is the network 120 or the network of the method 400A, 400B, 600A or 600B, the storage unit 820 stores the program code corresponding to the method 400A, 400B, 600A or 600B. If the data processing system 800 is the communication device 110 or the UE of the method 500 or 700, the storage unit 820 stores the program code corresponding to the method 500 or 700. When the data processing system 800 communicates with a remote entity, the processing unit 810 may read and execute the program code stored in the storage unit 820 to perform a corresponding operation (i.e. the method 400A, 400B, 500, 600A, 600B or 700).

The storage unit 820 may be any data storage device which may be read and executed by the processing unit 810. The storage unit 820 may be a subscriber identity module (SIM), a read-only memory (ROM), an erasable programmable ROM (EPROM), an electrically erasable programmable ROM (EEPROM), a random access memory (RAM), a CD-ROM, a magnetic tape, a hard disk, a solid state disk (SSD), a flash memory or other data storage device suitable for storing a program code, but is not limited thereto. The communication unit 830 may be a radio transceiver for performing wireless communication with a remote entity based on the operation result of the processing unit 810. For example, if the data processing system 800 is the network 120 of FIG. 1, the communication unit 830 performs wireless communication with the communication device 110. If the data processing system 800 is the communication device 110 of FIG. 1, the communication unit 830 performs wireless communication with the network 120.

It will be apparent to those skilled in the art that various modifications and variations can be made to the structure of the invention without departing from the scope or spirit of the invention. In view of the foregoing, it is intended that the invention cover modifications and variations of this invention provided they fall within the scope of the following claims.

## Claims

1. A method of handling wireless communications for a network of a communication system, the method comprising:
communicating with a communication device of the communication system using normal latency configuration;
receiving user equipment (UE) capability information from the communication device, the UE capability information indicating that the communication device supports reduced latency;
transmitting a configuration message to the communication device in response to the UE capability information, the configuration message for configuring the communication device to apply reduced latency;
transmitting a first hybrid automatic repeat request (HARQ) message to the communication device in a slot of an n-th subframe on a downlink component carrier (CC) after transmitting the configuration message; and
receiving a first HARQ feedback message from the communication device in a slot of an (n+x)th subframe on a first uplink CC, wherein n and x are integers, and x is positive and smaller than 4.

2. The method of claim 1, further comprising:
transmitting an indication message to the communication device for indicating the first HARQ message, wherein the indication message comprises at least one of a resource block assignment, a modulation and coding scheme (MCS), an HARQ process number, a new data indicator (NDI) and a redundancy version (RV).

3. The method of claim 1 or 2, further comprising:
transmitting a second HARQ message to the communication device in response to the first HARQ feedback message in a slot of an (n+x+y)th subframe on the first downlink CC, wherein y is an positive integer smaller than 4; and wherein each of the n-th subframe, the (n+x)th subframe and the (n+x+y)th subframe comprises two slots; and wherein the slot of the n-th subframe, the slot of (n+x)th subframe and the slot of (n+x+y)th subframe are respectively the first slot of the n-th subframe, the first slot of the (n+x)th subframe and the first slot of the (n+x+y)th subframe, or wherein the slot of the n-th subframe, the slot of the (n+x)th subframe and the slot of the (n+x+y)th subframe are respectively the second slot of the n-th, the second slot of the (n+x)th subframe and the second slot of the (n+x+y)th subframe.

4. The method of claim 3, further comprising:
receiving a second HARQ feedback message from the communication device in a slot of an (n+x+y+z)th subframe on the first uplink CC, wherein z is a positive integer smaller than 4.

5. The method of any one of the preceding claims, wherein the UE capability information indicates that the communication device supports reduced latency for a certain number of HARQ processes.

6. The method of any one of the preceding claims, further comprising:
configuring the first downlink CC and a second downlink CC to the communication device for carrier aggregation (CA) or dual connectivity (DC);
transmitting a third HARQ message to the communication device in two slots of an p-th subframe on the second downlink CC; and
receiving a third HARQ feedback message from the communication device in two slots of an (p+x)th subframe on the first uplink CC for CA or on a second uplink CC for DC.

7. The method of any one of the preceding claims, further comprising:
configuring the first downlink CC and a second downlink CC to the communication device for carrier aggregation (CA) or dual connectivity (DC);
transmitting a fourth HARQ message to the communication device in a slots of an m-th subframe on the second downlink CC; and
receiving a fourth HARQ feedback message from the communication device in a slot of an (m+x)th subframe on the first uplink CC for CA or on a second uplink CC for DC, wherein each of the m-th subframe and the (m+x)th subframe comprises two slots, and wherein the slot of the m-th subframe and the slot of (m+x)th subframe are respectively the first slot of the m-th and (m+x)th subframes, or wherein the slot of the (m+x)th subframe and the slot (m+x)th subframes are respectively the second slot of the m-th and (m+x)th subframes.

8. A method of handling wireless communications for a network of a communication system, the method comprising:
communicating with a communication device of the communication system using normal latency configuration;
receiving user equipment (UE) capability information from the communication device, the UE capability information indicating that the communication device supports reduced latency;
transmitting a configuration message to the communication device in response to the UE capability information, the configuration message for configuring the communication device to apply reduced latency;
receiving a first hybrid automatic repeat request (HARQ) message from the communication device in a slot of an n-th subframe on a first uplink component carrier (CC) after transmitting the configuration message; and
transmitting a first HARQ feedback message to the communication device in a slot of an (n+x)th subframe on a first downlink CC, wherein n and x are integers, and x is positive and smaller than 4.

9. The method of claim 8, further comprising:
transmitting an indication message to the communication device for indicating that the communication device transmits the first HARQ message, wherein the indication message comprises at least one of a resource block assignment, a modulation and coding scheme (MCS) and an HARQ process number.

10. The method of claim 8 or 9, further comprising:
receiving a second HARQ message from the communication device in a slot of an (n+x+y)th subframe on the first uplink CC, wherein y is a positive integer smaller than 4; wherein each of the n-th subframe, the (n+x)th subframe and the (n+x+y)th subframe comprises two slots; and wherein the slot of the n-th subframe, the slot of the (n+x)th subframe and the slot of the (n+x+y)th subframe are respectively the first slot of the n-th subframe, the first slot of the (n+x)th subframe and the first slot of the (n+x+y)th subframe, wherein the slot of the n-th subframe, the slot of the (n+x)th and the slot of the (n+x+y)th subframe are respectively the second slot of the n-th subframe, the second slot of the (n+x)th subframe and the second slot of the (n+x+y)th subframe, or wherein the slot of the n-th subframe, the slot of the (n+x)th and the slot of the (n+x+y)th subframe are respectively the second slot of the n-th subframe, the first slot of the (n+x)th subframe and the second slot of the (n+x+y)th subframe.

11. The method of claim 10, further comprising:
transmitting a second HARQ feedback message to the communication device in a slot of an (n+x+y+z)th subframe on the first downlink CC, wherein z is a positive integer smaller than 4.

12. The method of any one of claims 8 to 11, further comprising:
configuring the first uplink CC, the first downlink CC, a second uplink CC and a second downlink CC to the communication device for carrier aggregation (CA) or dual connectivity (DC);
receiving a third HARQ message from the communication device in two slots of a p-th subframe on the second uplink CC; and
transmitting a third HARQ feedback message to the communication device in two slots of a (p+x)th subframe on the second downlink CC.

13. The method of any one of claims 8 to 12, further comprising;
configuring the first uplink CC, the first downlink CC, a second uplink CC and a second downlink CC to the communication device for carrier aggregation (CA) or dual connectivity (DC);
receiving a fourth HARQ message from the communication device in a slot of an m-th subframe on the second uplink CC; and
transmitting a fourth HARQ feedback message to the communication device in a slot of an (m+x)th subframe on the second downlink CC, wherein each of the m-th subframe and the (m+x)th subframe comprises two slots, and wherein the slot of the m-th subframe and the slot of (m+x)th subframe are respectively the first slot of the m-th and (m+x)th subframes, wherein the slot of the (m+x)th subframe and the slot (m+x)th subframes are respectively the second slot of the m-th and (m+x)th subframes, or wherein the slot of the m-th subframe is the second slot of the m-th subrame and the slot of the (m+x)th subframe is the first slot of the (m+x)th subframe.

14. A method of handling wireless communications for a communication device of a communication system, the method comprising:
communicating with a network of the communication system using normal latency configuration;
transmitting user equipment (UE) capability information to the network, the UE capability information indicating that the communication device supports reduced latency;
receiving a configuration message from the network, wherein the configuration message is transmitted by the network for configuring the reduced latency in response to the UE capability information;
applying reduced latency in response to the configuration message;
receiving a first hybrid automatic repeat request (HARQ) message from the network in a slot of an n-th subframe on a downlink component carrier (CC) after applying the reduced latency; and
transmitting a first HARQ feedback message to the network in a slot of an (n+x)th subframe on a uplink CC, wherein n and x are integers, and x is positive and smaller than 4.

15. A method of handling wireless communications for a communication device of a communication system, the method comprising:
communicating with a network of the communication system using normal latency configuration;
transmitting user equipment (UE) capability information to the network, the UE capability information indicating that the communication device supports reduced latency;
receiving a configuration message from the network, wherein the configuration message is sent by the network for configuring the reduced latency in response to the UE capability information;
applying reduced latency in response to the configuration message;
transmitting a first hybrid automatic repeat request (HARQ) message to the network in a slot of an n-th subframe on a first uplink component carrier (CC); and
receiving a first HARQ feedback message from the network in a slot of an (n+x)th subframe on a first downlink CC, wherein n and x are integers, and x is positive and smaller than 4.
transmitting a third HARQ message to the network in two slots of the p-th subframe on the second uplink CC; and
receiving a third HARQ feedback message from the network in two slots of the (p+x)th subframe on the second downlink CC.
